# EUROPÄISCHE PATENTSCHRIFT

(11) **EP 3 055 449 B1**
(45) Veröffentlichungstag und Bekanntmachung des Hinweises auf die Patenterteilung: **13.11.2019**
(21) Anmeldenummer: 14789989.2
(22) Anmeldetag: 26.09.2014
(51) Int. Cl.: D01D 1/02, B01F 15/04, B01F 7/10, B01F 15/00, B29B 7/40, B29B 7/72, G05D 24/02

(54) **VERFAHREN ZUR BEHANDLUNG EINES GEMISCHES**
METHOD FOR TREATING A MIXTURE
PROCÉDÉ DE TRAITEMENT D'UN MÉLANGE

(30) Priorität: 10.10.2013 DE 102013111221; 15.08.2014 DE 102014111689
(43) Veröffentlichungstag der Anmeldung: 17.08.2016
(73) Patentinhaber: LIST Technology AG, 4422 Arisdorf (CH)
(72) Erfinder: WITTE, Daniel, 79639 Grenzach-Wyhlen (DE); OECKNICK, Christian, 79618 Rheinfelden (DE)
(74) Vertreter: Patentanwälte und Rechtsanwalt Weiß, Arat & Partner mbB
(86) Internationale Anmeldenummer: PCT/EP2014/002607
(87) Internationale Veröffentlichungsnummer: WO 2015/051884

(56) Entgegenhaltungen:
- WO-A2-2014/023738
- DE-A1-102010 014 298
- US-A1- 2006 193 197
- US-B1- 7 331 703

## Beschreibung

Verfahren zur Behandlung eines Gemisches in einem ein- oder mehrwelligen Mischer entsprechend dem Oberbegriff von Anspruch 1 sowie eine Vorrichtung hierfür.

### Stand der Technik

Derartige Verfahren werden insbesondere in sogenannten Mischknetern durchgeführt. Diese dienen sehr vielfältigen Zwecken. Als erstes ist das Eindampfen mit Lösungsmittelrückgewinnung zu erwähnen, welches chargenweise oder kontinuierlich und oft auch unter Vakuum erfolgt. Hierdurch werden beispielsweise Destillationsrückstände und insbesondere Toluoldiisocyanate behandelt, aber auch Produktionsrückstände mit toxischen oder hochsiedenden Lösungsmitteln aus der Chemie und Pharmaproduktion, Waschlösungen und Lack-Schlämme, Polymerlösungen, Elastomerlösungen aus der Lösemittelpolymerisation, Klebstoffe und Dichtmassen,

Mit den Apparaten wird ferner eine kontinuierliche oder chargenweise Kontakttrocknung, Wasser- und/oder lösemittelfeuchter Produkte, oftmals ebenfalls unter Vakuum, durchgeführt. Die Anwendung ist vor allem gedacht für Pigmente, Farbstoffe, Feinchemikalien, Additive, wie Salze, Oxyde, Hydroxyde, Antioxydantien, temperaturempfindliche Pharma- und Vitaminprodukte, Wirkstoffe, Polymere, synthetische Kautschuke, Polymersuspensionen, Latex, Hydrogele, Wachse, Pestizide und Rückstände aus der chemischen oder pharmazeutischen Produktion, wie Salze, Katalysatoren, Schlacken, Ablaugen gedacht. Anwendung finden diese Verfahren auch in der Lebensmittelproduktion, beispielsweise bei der Herstellung und/oder Behandlung von Blockmilch, Zuckeraustauschstoffen, Stärkederivaten, Alginaten, zur Behandlung von Industrieschlammen, Ölschlämmen, Bioschlämmen, Papierschlämmen, Lackschlämmen und allgemein zur Behandlung von klebrigen, krustenden zähpastösen Produkte, Abfallprodukten und Zellulosederivaten.

In Mischknetern kann ein Entgasen und/oder Devolatilisieren stattfinden. Angewendet wird dies auf Polymerschmelzen, nach Kondensation von Polyester oder Polyamidschmelzen, auf Spinnlösungen für synthetische Fasern und auf Polymer- oder Elastomergranulate bzw. -pulver im festen Zustand.

In einem Mischkneter kann eine Polykondensationsreaktion, meist kontinuierlich und meist in der Schmelze, stattfinden und wird vor allem verwendet bei der Behandlung von Polyamiden, Polyester, Polyacetaten, Polyimide, Thermoplaste, Elastomere, Silikone, Harnstoffharze, Phenolharze, Detergentien und Düngemittel.

Stattfinden kann auch eine Polymerisationsreaktion, ebenfalls meist kontinuierlich. Dies wird angewendet auf Polyacrylate, Hydrogele, Polyole, thermoplastische Polymere, Elastomere, syndiotaktisches Polystyrol und Polyacrylamide.

Ganz allgemein können im Mischkneter feste, flüssige und mehrphasige Reaktionen stattfinden. Dies gilt vor allem für Backreaktionen, bei der Behandlung von Flusssäure, Stearaten, Cyanaten, Polyphosphaten, Cyanursäuren, Zellulosederivaten, -ester, -äther, Polyacetalharzen, Sulfanilsäuren, Cu-Phthalocyaninen, Stärkederivaten, Ammonium-Polyphosphaten, Sulfonaten, Pestiziden und Düngemittel.

Des Weiteren können Reaktionen fest-/gasförmig (z.B. Karboxylierung) oder flüssig-/gasförmig stattfinden. Angewendet wird dies bei der Behandlung von Acetaten, Aciden, Kolbe-Schmitt-Reaktionen, z.B. BON, Na-Salicylaten, Parahydroxibenzoaten und Pharmaprodukten.

Reaktionen flüssig/flüssig erfolgen bei Neutralisationsreaktionen und Umesterungsreaktionen.

Ein Lösen und/oder Entgasen in derartigen Mischknetern findet bei Spinnlösungen für synthetische Fasern, Polyamiden, Polyester und Zellulosen statt.

Ein sogenanntes Flushen findet bei der Behandlung bzw. Herstellung von Pigmenten statt.

Eine Solid-State- Nachkondensation findet bei der Herstellung bzw. Behandlung von Polyester und Polyamiden statt, ein kontinuierliches Anmaischen z.B. bei der Behandlung von Fasern, z.B. Zellulosefasern mit Lösungsmitteln, eine Kristallisation aus der Schmelze oder aus Lösungen bei der Behandlung von Salzen, Feinchemikalien, Polyolen, Alkoholaten, ein Compoundieren, Mischen (kontinuierlich und/oder chargenweise) bei Polymeren-Mischungen, Silikonmassen, Dichtmassen, Flugasche, ein Koagulieren (insbesondere kontinuierlich) bei der Behandlung von Polymersuspensionen.

In einem Mischkneter können auch multifunktionale Prozesse kombiniert werden, beispielsweise Erhitzen, Trocknen, Schmelzen, Kristallisieren, Mischen, Entgasen, Reagieren - dies alles kontinuierlich oder chargenweise. Hergestellt bzw. behandelt werden dadurch Polymere, Elastomere, anorganische Produkte, Rückstände, Pharmaprodukte, Lebensmittelprodukte, Druckfarben.

In Mischknetern kann auch eine Vakuumsublimation/ Desublimation stattfinden, wodurch chemische Vorprodukte, z.B. Anthrachinon, Metallchloride, metallorganische Verbindungen usw. gereinigt werden. Ferner können pharmazeutische Zwischenprodukte hergestellt werden.

Eine kontinuierliche Trägergas-Desublimation findet z.B. bei organischen Zwischenprodukten, z.B. Anthrachinon und Feinchemikalien statt.

Ein Mischkneter hat einen durchgehenden Gas - und Produktraum, der sich von einem Eintrag bis zu einem Austrag erstreckt. Hierdurch unterscheidet sich ein Mischkneter wesentlich von einem Extruder, bei dem es keinen durchgängigen Gasraum zwischen Eintrag und Austrag gibt. Der durchgängige Gasraum beim Mischkneter entsteht dadurch, dass der Mischkneter horizontal angeordnet und nur zu einem Teil mit Produkt gefüllt ist. Über dem Produkt gibt es einen freien Gasraum, in dem sich ausgedampftes Lösungsmittel oder dergleichen ansammelt.

Im Wesentlichen werden einwellige und zweiwellige Mischkneter unterschieden. Ein einwelliger Mischkneter mit horizontal angeordneter Welle wird beispielsweise in der EP0451747 beschrieben. Er ist vor allem dadurch gekennzeichnet, dass sich auf der Welle Knetelemente befinden, die mit Gegenelementen zusammenwirken, welche von einer Gehäuseinnenwand sich radial zur Welle hin erstrecken. Meist werden dabei die Knetelemente auf der Welle von Scheibenelementen mit aufgesetzten Knetbarren gebildet.

Mehrwellige Misch- und Knetmaschinen werden in der CH-A 506 322, der EP 0 517 068 B, der DE 199 40 521 A1 oder der DE 101 60 535 beschrieben ist. Dort befinden sich z.B. auf einer horizontal angeordneten Welle radiale Scheibenelemente und auf bzw. zwischen den Scheiben angeordnete axial ausgerichtete Knetbarren. Zwischen diese Scheiben greifen von der anderen horizontal angeordneten Welle rahmenartig geformte Misch- und Knetelemente ein. Diese Misch- und Knetelemente reinigen die Scheiben und Knetbarren der ersten Welle. Die Knetbarren auf beiden Wellen reinigen wiederum die Gehäuseinnenwand. Die beiden Wellen können gleichsinnig oder gegensinnig drehen und mit gleicher oder unterschiedlicher Drehzahl.

Bei der vorliegenden Erfindung geht es vor allem um die Herstellung einer Spinnlösung. Darauf soll allerdings die Erfindung nicht beschränkt sein. Zellulose ist ein gängiges Material zur Produktion von Textilfasern aus einer derartigen Spinnlösung. Die einfachste Art der Herstellung ist die Verwendung von reiner Zellulose, wie sie in der Natur verfügbar ist. Die sogenannte Baumwolle wächst als spinnbare Faser in einer Staudenpflanze und kann nach Abernten, Sortieren und Waschen direkt versponnen werden. Der Nachteil dieser Methode ist die vergleichsweise schlechte Verfügbarkeit von Baumwollpflanzen. Auch wachsen diese nur in bestimmten Klimazonen und bedürfen einer intensiven Bewässerung. Nur ein kleiner Teil der Pflanzen ist effektiv verspinnbar.

Zellulose ist praktisch in allen Pflanzen vorhanden, insbesondere in Holz. Diese Zellulose muss gereinigt werden, wobei insbesondere Hemizellulose und Lignin entfernt werden muss. Anders als Baumwolle ist diese gereinigte Zellulose nicht verspinnbar. Sie wird daher in einem geeigneten Lösemittel aufgelöst und durch eine Düse extrudiert. Nach dem Austritt aus der Düse wird die Zellulose durch Auswaschen des Lösemittels gefällt. Es entsteht eine Faser mit definiertem Durchmesser, je nach Durchmesser der Spinndüse. Dieses Verfahren wird Lösungsspinnen genannt. Als Lösemittel gibt es verschiedene Alternativen. Am weitesten verbreitet ist die Auflösung in Xanthat. Das Produkt dieses Verfahrens wird üblicherweise Viskose genannt, im englischsprachigen Raum auch Rayon. Zellulose ist physikalisch nur sehr schwer lösbar. Das Viskoseverfahren ist eher ein halb-chemisches Verfahren, da die Zellulosemoleküle eine temporäre Bindung mit den Xanthat eingehen. Ein anderes altes chemisches Verfahren ist die Azetylierung, wobei das Endprodukt aber keine Zellulose, sondern Zelluloseazetat ist.

Das Xanthat-Verfahren ist sehr umstritten, da es zu erheblichen Beeinträchtigungen der Umwelt kommt. Diese sind nur durch aufwendige Aufbereitungsverfahren des Abwassers und der Abluft beherrschbar. Es wurde daher schon von einem halben Jahrhundert versucht, Alternativen dieses Verfahrens zu entwickeln. Das bedeutendste dieser Verfahren, das auch schon kommerziell genutzt wird, ist die Auflösung in NMMO als Lösemittel. Das Produkt dieses Verfahren wird auch als "Lyocell" bezeichnet.

Beim NMMO-Verfahren wird die gereinigte Zellulose auf Rollen oder in Ballen angeliefert und zerschreddert. Diese Zellulose wird dann mit Wasser und unterschiedlichen Additiven gequollen. Es gibt auch Hersteller, die diesen Quellschritt nicht vollziehen. Die nasse oder trockene Zellulose wird nun einem Gemisch aus NMMO und Wasser (NMMO ist in Wasser gut lösbar) beigefügt. Bei trockener Zellulose muss der Wassergehalt höher sein, da dann die Quellung im Gemisch Wasser, Zellulose und NMMO stattfinden muss. Nach der Vermischung wird die Suspension leicht erhitzt und unter Vakuum in einem Behälter mit drehender Welle ein Teil des Wassers entfernt. Unter diesen Umständen ist dann die Zellulose im Wasser/NMMO lösbar. Der erforderliche Feststoffgehalt lässt sich über die Produkttemperatur recht zuverlässig bestimmen, da sich das Gemisch in der Nähe des thermodynamischen Gleichgewichts befindet. Zu beachten ist, dass es sich um ein Dreistoffgemisch handelt, der Kochpunkt daher nicht nur vom Wassergehalt, sondern auch vom Verhältnis NMMO zur Zellulose abhängt. Dieses Verhältnis wird über die Einwaage des Feeds eingestellt, da NMMO und Zellulose beide nicht flüchtig sind. Übliche Löseapparate, die hier verwendet werden, sind horizontale Kneter oder vertikale Dünnschichtverdampfer mit drehender Welle zur mechanischen Vermischung.

Im klassischen Verfahren wird das Verhältnis NMMO zur Zellulose so eingestellt, dass die entstehende Lösung nach dem Löseprozess direkt verspinnbar ist. Es hat sich allerdings gezeigt, dass dieses Verfahren Nachteile hat. Zum einen ist die Wasserverdampfung bei höherem Wassergehalt höher. Durch eigene Messungen wurde bestätigt, dass der Siedepunkt des Gemisches bei sinkendem Wassergehalt steigt. Damit ist im Verlauf des Löseprozesses immer weniger treibendes Gefälle für den Wärmetransport der Heizwände vorhanden. Zum anderen sinkt auch der Wärmedurchgangskoeffizient mit sinkendem Wassergehalt beträchtlich. Es ist daher vorgeschlagen worden, nur eine Teilmenge des NMMO der Zellulose beizumischen, den Rest aber nach erfolgtem Löseprozess, wobei das NMMO, das am Ende zugefügt wird, separat eingedampft werden kann.

Dieses neue Verfahren ist wirtschaftlicher, da der Apparat für den Löseprozess kleiner sein kann bzw. höhere Durchsätze erzielt werden können. Ein Nachteil dieser Verfahrensweise ist allerdings, dass die Viskosität der Lösung im Löseprozess stark ansteigt. Das hat den Vorteil, dass nun auch mechanischer Energieeintrag möglich ist, aber den Nachteil, dass die Energie sehr viel schneller im viskosen Bereich eingeknetet wird. Der Anwender muss daher entweder 1. über die Drehzahl gegensteuern, 2. im Lösebereich kühlen oder 3. die Verweilzeit in der Mischzone verkürzen. Im ersteren Fall wird die Leistung des Lösers verringert und die Vermischung verschlechtert, im 2. Fall die Vermischung verschlechtert und im 3. Fall die Energieausbeute verschlechtert. Ein weiterer Nachteil dieses Verfahrens ist, dass die Drehmomentbelastung der Welle nur lokal vorhanden ist. Damit muss der Löseapparat sehr robust gebaut werden, auch für den Teil des Lösers, wo im kontinuierlichen Betrieb geringe mechanische Belastung herrscht. Wird das nicht so gemacht, kommt es zu mechanischen Schäden beim An- oder Abfahren des Prozesses oder bei falschen Steuerbefehlen des Betreibers, schwankender Produktqualität im Feed usw. Die hohe lokale Belastung ist auch ein Sicherheitsproblem. Das Gemisch NMMO/Wasser/Zellulose ist ab bestimmten Produkttemperaturen hochexplosiv. Bei lokal hohem Drehmoment ist die Gefahr von Temperaturspitzen höher.

Aus dem Stand der Technik ist allgemein bekannt, dass ein Gemisch auf die Veränderung seiner Viskosität hin überwacht wird. Beispielsweise ist dies aus der US 7 331 703 B1 für Tintendrucker bekannt. Die Überwachung erfolgt anhand der Veränderung der Drehzahl einer Motorspindel.

Aus US 2006/193197 A1 ist ein Mischkneter bekannt, bei dem eine Rückmischung innerhalb des Produktraumes stattfindet, bis eine vorbestimmte Viskosität des Produktes erreicht ist. Diese Viskosität des Produktes wird insgesamt im Produktraum durch die Messung des Drehmoments des Antriebs ermittelt.

Des weiteren ist aus der WO 2014/023738 A2 bekannt, dass über die Länge des Mischkneters verteilte Knetelemente überwacht werden. Dies gilt vor allem für eine Überwachung auf Bruch oder Deformierung, Hierzu kann beispielsweise auch ein Drehmomentsensor vorgesehen sein, der ermittelt, welche Kräfte auf das Knetelement einwirken.

Aus der DE 10 2010 014 298 A1 ist ein Verfahren zur Herstellung von Formkörpern, insbesondere von Lyocellfasern bekannt, bei dem eine Grundsubstanz zum Herstellen einer Formlösung mit einem Lösungsmittel vermischt und anschliessend dieses Lösungsmittel zumindest teilweise aus der Mischung entfernt und die Formlösung einer Einrichtung zum Formen zugeführt wird. Damit wird die Formlösung vor dem Formen verdünnt, d.h., die Viskosität der Formlösung wird beeinflusst.

### Aufgabe

Aufgabe der vorliegenden Erfindung ist es, ein Verfahren der oben genannten Art wesentlich kontrollierter durchzuführen.

### Lösung der Aufgabe

Zur Lösung der Aufgabe führen die Merkmale entsprechend dem kennzeichnenden Teil von Anspruch 1.

Wie oben erwähnt, bezieht sich das erfindungsgemäße Verfahren auf die Behandlung eines beliebigen Gemisches, wobei unter Gemisch alles zu verstehen ist, was aus mehr als einem Bestandteil besteht. In der Regel ist ein Bestandteil fest und ein Bestandteil nicht fest.

Bei dem hier vorgeschlagenen Verfahren beispielsweise bezogen auf die Behandlung einer Spinnlösung wird die lokale Belastung der Welle durch gezielte Dosierung von NMMO-Frischlösung im Lösefenster des Löseapparats optimiert. Gleichzeitig dient die zusätzliche Wassermenge der NMMO-Dosierung der Temperaturkontrolle, da es verdampft und damit Kühlung bereitstellt. Die Dosierstellen des zusätzlichen NMMO sind nur im hinteren Teil des Löseapparats möglichst dicht über die Länge vorgesehen, wobei die Konvention ist, dass im vorderen Teil die Zellulose mit geringster NMMO-Beladung dosiert wird und hinten die Lösung ausgetragen wird. Die lokale Drehmomentbelastung wird an der Welle oder statischen Einbauten über Biegebelastungen gemessen und zurückgerechnet oder aus dem Temperaturverlauf und der Massenbilanz errechnet, indem eine separat gemessene Viskosität zugrunde gelegt wird.

In einer besonderen Ausgestaltung dieses Verfahrens wird das Verhältnis Zellulose zu NMMO der Feedlösung maximiert und damit die Wassermenge, bevor sich die Zellulose anfängt zu lösen, minimiert. Als weitere Ausgestaltung des Verfahrens wird nur soviel NMMO über die Länge des Löseapparates dosiert, wie für eine Optimierung der Drehmomentaufgabe notwendig ist und die Restmenge, die zur Erzeugung der erforderlichen Spinnlösung notwendig ist, nach den Löseschritt dazugegeben. Ausserdem wird die Produkttemperatur über die Dosiermenge des NMMO über die Länge kontrolliert. Die Mischzeit lässt sich verlängern, ohne die Lösung durch Scherung zu überhitzen. Erfindungsgemäss wird ein Verfahren zur Behandlung eines Gemisches in einem ein- oder mehrwelligen Mischer vorgeschlagen, wobei das Gemisch zumindest ein flüchtiges und zumindest ein nicht flüchtiges Lösemittel sowie eine festes oder flüssiges nichtflüchtiges Substrat umfasst. Erfindungsgemäss erfolgt hierbei ein zumindest teilweises Verdampfen des zumindest einen flüchtigen Lösemittels, so dass sich das Substrat in dem verbleibenden Lösemittel bzw. Lösemittelgemisch löst. Weiterhin wird ein Lösemittel bzw. Lösemittelgemisch über eine Länge eines Produktraums zudosiert, um eine Viskosität des Gemischs bzw. der Lösung zu verringern und eine Verdampfungsleistung zu steigern.

Ein Mischer zur Durchführung des erfindungsgemässen Verfahrens ist beispielsweise ein Mischkneter. Die zu bearbeitenden Komponenten im Falle der Behandlung einer Spinnlösung sind beispielsweise Wasser als flüchtiges Lösemittel, NMMO (N-Methylmorpholin-N-oxid, auch "NMO") als nicht-flüchtiges Lösemittel und Zellulose als Substrat. Das über die Länge des Produktraums zudosierte Lösemittel ist beispielsweise NMMO oder ein Gemisch aus NMMO und Wasser.

Gemäss einem bevorzugten Ausführungsbeispiel erfolgt die Kontrolle der Temperatur der Lösung bzw. des Gemischs durch die Menge des zudosierten Lösemittels.

Gemäss einem weiteren Ausführungsbeispiel erfolgt die Bestimmung der Viskosität der Lösung bzw. des Gemischs, indem die mechanische Belastung der Welle des Mischers oder der statischen Einbauten in einem Produktraum bestimmt wird.

Gemäss einem weiteren Ausführungsbeispiel erfolgt die Errechnung der Viskosität der Lösung bzw. des Gemischs durch Messung der Produkttemperatur bzw. Temperatur des Gemischs und Rückrechnung aus dem Siedepunkt und der bekannten Viskosität bei verschiedener Zusammensetzung der Lösung bzw. des Gemischs.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
**Figur 1** eine schematisch dargestellte Draufsicht auf eine erfindungsgemässe Vorrichtung zum Behandeln von viskos-pastösen Massen;
**Figur 2** eine perspektivische Ansicht eines erfindungsgemässen Knetelements mit Überwachungselementen;
**Figur 3** eine blockschaltbildliche Darstellung eines Ausführungsbeispiels einer Überwachungseinrichtung.

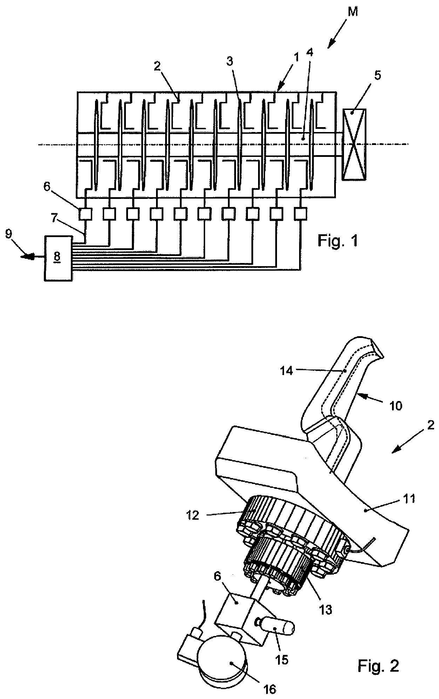

Von einem Mischkneter M, wie er deutlicher in beispielsweise der DE 43 03 852 A1 und in weiteren, im Stand der Technik gezeigten Schriften gezeigt ist, ist in Figur 1 ein Gehäuse 1 dargestellt. In diesem Gehäuse 1 befinden sich Knetelemente 2, die C-förmig ausgebildet und radial nach innen gerichtet sind. Die Knetelemente 2 wirken mit weiteren scheibenförmigen Knetelementen 3 zusammen, die auf einer Welle 4 angeordnet sind. Dieser Welle 4 ist ein Antrieb 5 zugeordnet.

Für eine Reihe von Knetelementen 2 ist ferner jeweils ein Ventilblock 6 angedeutet, der über eine Leitung 7 mit einer Überwachungseinrichtung 8 verbunden ist. Diese Überwachungseinrichtung 8 kann, wie durch den Pfeil 9 angedeutet, wiederum mit einer zentralen Kontrolleinrichtung verbunden sein.

Das Knetelement 2 besteht gemäss Figur 2 im Wesentlichen aus einem Knetkörper 10, der auf einem Gehäuseflansch 11 aufsitzt. Er ist ferner mit einem Drehmomentsensor 12 verbunden, dem eine Spanneinrichtung 13 zugeordnet ist.

In dem Knetkörper 10 befindet sich, gestrichelt angedeutet, zumindest ein Kanal 14, der nach der Spanneinrichtung 13 mit dem Ventilblock 6 in Wirkverbindung steht. Dieser Kanal 14 kann mittels einem Druckmedium aus einem Gaszylinder 15 mit einem Druckmittel beaufschlagt werden. Der Druck in dem Kanal 14 wird über ein Druckmessgerät 16, insbesondere ein Manometer, überwacht.

### Die Funktionsweise der vorliegenden Erfindung ist folgende:

In dem Gehäuse 1 befindet sich bevorzugt eine Mehrzahl von Knetelementen 2, wie sie in Figur 2 dargestellt sind. Der Knetkörper 10 selbst ragt in das Innere des Gehäuses ein und ist durch das Gehäuse hindurch mittels dem Gehäuseflansch 11 mit dem ausserhalb des Gehäuses liegenden Drehmomentsensor 12, der Spanneinrichtung 13, dem Ventilblock 6 und dem Gaszylinder bzw. Manometer verbunden. Über den Gaszylinder 15 wird im Kanal 14 ein Druck aufrechterhalten. Im Falle einer Beschädigung des Knetkörpers 10 entweicht durch einen möglichen Riss hindurch das Druckgas in das Innere des Gehäuses, so dass sich der Druck in dem Kanal 14 reduziert. Dies wird durch das Manometer 16 ermittelt, welches an die Überwachungseinrichtung 8 ein Signal abgibt. Natürlich kann hier auch eine bestimmte Grenze festgelegt werden, unter der erst der Druckschalter anspricht. Im Übrigen soll das Volumen der Befüllung, welches überwacht wird, möglichst klein gewählt werden, um ein schnelles sensibles Überwachen sicherzustellen.

Nunmehr kann über die entsprechende Leitung 7 das Knetelement 2 identifiziert werden, welches möglicherweise einen Schaden aufweist. Das beschädigte Knetelement kann nun entfernt und geblindet werden, während die Anlage weiter in Betrieb ist. Der Mischkneter wird ganz normal weitergefahren und zwar ohne Stillstand.

Ist mit dem Knetkörper auch ein Temperatursensor verbunden, so kann die Temperatur insbesondere in der zu behandelnden Masse ermittelt werden. Diese Temperatur dient dann einer gezielten Steuerung der Temperaturführung der Behandlung.

Es kann auch vorkommen, dass es zu einer nicht gewünschten Verformung des Knetelements ohne Rissbildung kommt. Erfindungsgemäss ist hier vorgesehen, dass über entsprechende Dehnmessstreifen bzw. auch den Drehmomentsensor 12 die Verformung ermittelt und ggf. schadhafte Knetelement ausgetauscht werden.

Ein wesentlicher Vorteil der Überwachung der Knetelemente auf Verformung beispielsweise mittels eines Drehmomentsensors ist der, dass nunmehr auch die Viskosität des im Kneter zu behandelnden Produktes an einer bestimmten Stelle im Produktraum entlang der Welle überwacht werden kann. Bislang wurde die Gesamtviskosität im Kneter durch die Überwachung des Drehmoments des Antriebs für die Welle überwacht. Wird jedoch jedes einzelne Knetelement oder vorbestimmte Knetelemente entlang der Länge des Kneters überwacht, kann die Viskosität in einzelnen Zonen des Kneters zwischen Eintrag und Austrag bestimmt werden. Dies ist ein ganz erheblicher Vorteil der vorliegenden Erfindung.

Ein weiterer Gedanke bezieht sich darauf, dass über diese so ausgestalteten Knetelemente Mittel, die zur Behandlung der viskos-pastösen Masse verwendet werden sollen, in das Gehäuse 1 eingespeist werden.

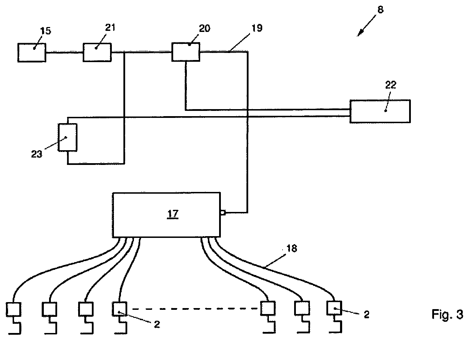

Ein Ausführungsbeispiel einer erfindungsgemässen Überwachungseinrichtung 8 ist in Figur 3 näher gezeigt. Hier sind die Knetelemente 2 mit einem gemeinsamen Ventilblock 17 verbunden. Hierzu ist jeweils eine Zuleitung 18 für ein Druckmittel vorgesehen. An den Ventilblock 17 schliesst eine Druckmittelleitung 19 an, in die zur Druckquelle 15 hin ein Durchflusssensor 20 und ein Druckminderer 21 eingeschaltet sind. Der Durchflusssensor 20 ist mit einem zentralen Steuergerät 22 verbunden, ebenso wie auch ein Drucksensor 23, der zwischen dem Druckminderer 21 und dem Durchflusssensor 20 in der Druckmittelleitung 19 überprüft, ob ein Druckmittel vorhanden ist.

In der Zeichnung ist nicht näher gezeigt, dass das Steuergerät selbstverständlich auch mit dem Druckquellenanschluss 15 und dem Ventilblock 17 sowie möglicherweise vorhandenen Steuerventilen bzw. Sensoren bei den Knetelementen 2 verbunden ist.

### Die Funktionsweise dieser Überwachungseinrichtung ist folgende:

Über den Druckmittelanschluss an die Druckquelle 15 steht an dem Druckminderer 21 ein Stickstoffgas mit ca. 4 bar an. Durch den Druckminderer 21 erfolgt eine Minderung des Druckes auf beispielsweise 1 bar. Der Stickstoff fliesst durch den Durchflusssensor 20 und die Druckmittelleitung 19 in den Ventilblock 17 und wird dort auf die einzelnen Knetelemente 2 verteilt.

Findet ein geringer Durchfluss statt, der sich nicht explosionsartig erhöht, so kann dieser auf eine normale Leckage zurückzuführen sein. Zum Zwecke der Trennung beider Vorfälle und zur Vermeidung von Falschalarm wird in der Druckmittelleitung 19 immer ein vorbestimmter, bevorzugt gleichbleibender Druck aufrecht erhalten, aber der Durchfluss, insbesondere bezogen auf die Durchflusszeit überwacht. Bei einer normalen Leckage findet ein sehr geringer Durchfluss innerhalb einer bestimmten Zeiteinheit statt. Ein Alarm wird erst dann ausgelöst, wenn sich der Durchfluss z.B. schlagartig oder stark erhöht. Dies ist ein Zeichen für einen Bruch oder eine Rissbildung in dem Knetelement, so dass dann Alarm ausgelöst wird.

Das entsprechende Steuersignal wird dann dazu benutzt, z.B. den Antrieb der Welle eines Mischkneters abzuschalten oder Ein- und Austragsorgane für Edukt oder Produkt in oder aus einem Kneterraum abzuschalten, anzuschalten oder sonst wie zu beeinflussen oder auch um eine Beheizung des Kneterraums bzw. der Knetelemente abzuschalten oder zu beeinflussen.

**Bezugszeichenliste**

| | | | | | |
|---|---|---|---|---|---|
| 1 | Gehäuse | 34 | | 67 | |
| 2 | Knetelement | 35 | | 68 | |
| 3 | Knetelement | 36 | | 69 | |
| 4 | Welle | 37 | | 70 | |
| 5 | Antrieb | 38 | | 71 | |
| 6 | Ventilblock | 39 | | 72 | |
| 7 | Leitung | 40 | | 73 | |
| 8 | Überwachungseinrichtung | 41 | | 74 | |
| 9 | Pfeil | 42 | | 75 | |
| 10 | Knetkörper | 43 | | 76 | |
| 11 | Gehäuseflansch | 44 | | 77 | |
| 12 | Drehmomentsensor | 45 | | 78 | |
| 13 | Spanneinrichtung | 46 | | 79 | |
| 14 | Kanal | 47 | | | |
| 15 | Druckquelle | 48 | | | |
| 16 | Manometer | 49 | | | |
| 17 | Ventilblock | 50 | | | |
| 18 | Zuleitung | 51 | | | |
| 19 | Druckmittelleitung | 52 | | | |
| 20 | Durchflusssensor | 53 | | | |
| 21 | Druckminderer | 54 | | | |
| 22 | Steuergerät | 55 | | | |
| 23 | Drucksensor | 56 | | M | Mischkneter |
| 24 | | 57 | | | |
| 25 | | 58 | | P | Produktraum |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zur Behandlung eines Gemisches in einem ein- oder mehrwelligen Mischer (M), insbesondere Mischkneter, insbesondere für die Zubereitung einer Spinnlösung, wobei einem Produkt ein Lösemittel bzw. Lösemittelgemisch über eine Länge eines Produktraums zudosiert wird, um eine Viskosität der Lösung bzw. des Gemischs zu verringern und eine Verdampfungsleistung zu steigern.
**dadurch gekennzeichnet,**
**dass** die Viskosität der Lösung bzw. des Gemischs an vorbestimmten Stellen des Produktraums entlang einer Welle bestimmt wird.

2. Verfahren nach Anspruch 1, **dadurch gekennzeichnet, dass** die Viskosität der Lösung bzw. des Gemisches an vorbestimmten Stellen des Produktraumes entlang einer Welle verändert wird.

3. Verfahren nach Anspruch 1, **dadurch gekennzeichnet, dass** durch Messung einer mechanischen Belastung von statischen und/oder dynamischen Einbauten (2) in dem Produktraum bestimmt wird.

4. Verfahren nach wenigstens einem der vorhergehenden Ansprüche, **dadurch gekennzeichnet, dass** die Viskosität der Lösung bzw. des Gemischs durch Messung der Produkttemperatur und Rückrechnung aus einem Siedepunkt und einer bekannten Viskosität bei verschiedener Zusammensetzung der Lösung errechnet wird.

5. Verfahren nach wenigstens einem der vorhergehenden Ansprüche, **dadurch gekennzeichnet, dass** eine Temperatur des Gemisches bzw. der Lösung durch eine Lösemittelmenge bzw. Lösemittelgemischmenge, die zudosiert wird, kontrolliert wird.

6. Verfahren nach wenigstens einem der Ansprüche 3 bis 5, **dadurch gekennzeichnet, dass** die Viskosität anhand von einem Drehmoment der Welle (4) und/oder der statischen und/oder dynamischen Einbauten (2) bestimmt wird,

7. Verfahren nach wenigstens einem der Ansprüche 3 bis 5, **dadurch gekennzeichnet, dass** zur Bestimmung der Viskosität eine Verformung der statischen und/oder dynamischen Einbauten (2) herangezogen wird.

8. Verfahren nach wenigstens einem der vorhergehenden Ansprüche, **dadurch gekennzeichnet, dass** das Gemisch zumindest ein flüchtiges und zumindest ein nicht flüchtiges Lösemittel sowie ein festes oder flüssiges nichtflüchtiges Substrat umfasst, wobei durch zumindest teilweises Verdampfen des zumindest einen flüchtigen Lösemittels sich das Substrat in dem verbleibenden Lösemittel bzw. Lösemittelgemisch löst

9. Vorrichtung zur Durchführung des Verfahrens nach wenigstens einem der Ansprüche 3 bis 8, **dadurch gekennzeichnet, dass** den statischen und/oder dynamischen Einbauten (2) ein Drehmomentsensor und/oder ein Sensor für eine Verformung zugeordnet ist/sind.

## Claims

1. Method for treating a mixture in a single-shaft or multi-shaft mixer (M), in particular a mixing kneader, in particular for preparing a spinning solution, wherein a solvent or solvent mixture is added to a product over a length of a product chamber in order to reduce a viscosity of the solution or mixture and increase an evaporation rate.
**characterised in that**
the viscosity of the solution or mixture is determined at predetermined locations of the product space along a shaft.

2. Method according to claim 1, **characterized in that** the viscosity of the solution is changed at predetermined locations of the product space along a shaft.

3. Method according to claim 1, **characterized in that** it is determined by measuring a mechanical load of static and/or dynamic internals (2) in the product space.

4. Method according to at least one of the preceding claims, **characterized in that** the viscosity of the solution or mixture is calculated by measuring the product temperature and recalculating from a boiling point and a known viscosity at different composition of the solution.

5. Method according to at least one of the preceding claims, **characterized in that** a temperature of the mixture or of the solution is controlled by a quantity of solvent or of the mixture of solvents which is added.

6. Method according to at least one of claims 3 to 5, **characterized in that** the viscosity is determined from a torque of the shaft (4) and/or the static and/or dynamic internals (2).

7. Method according to at least one of claims 3 to 5, **characterized in that** a deformation of the static and/or dynamic internals (2) is used to determine the viscosity.

8. Method according to at least one of the preceding claims, **characterized in that** the mixture comprises at least one volatile solvent and at least one non-volatile solvent as well as a solid or liquid non-volatile substrate, the substrate dissolving in the remaining solvent or solvent mixture by at least partial evaporation of the at least one volatile solvent.

9. Device for carrying out the method according to at least one of claims 3 to 8, **characterized in that** a torque sensor and/or a deformation sensor is assigned to the static and/or dynamic installations (2).

## Revendications

1. Procédé de traitement d'un mélange dans un mélangeur à un ou plusieurs arbres (M), en particulier un mélangeur-pétrisseur, en particulier pour la préparation d'une solution à filer, dans lequel à un produit est ajouté en quantité dosée un solvant ou un mélange de solvants sur une longueur d'une chambre de produit, pour réduire une viscosité de la solution ou du mélange et augmenter une capacité d'évaporation,
**caractérisé par le fait**
**que** la viscosité de la solution ou du mélange est déterminée à des endroits prédéterminés de la chambre de produit le long d'un arbre.

2. Procédé selon la revendication 1, **caractérisé par le fait que** la viscosité de la solution ou du mélange est modifiée à des endroits prédéterminés de la chambre de produit le long d'un arbre.

3. Procédé selon la revendication 1, **caractérisé par le fait que** par mesure est déterminée une charge mécanique d'installations statiques et/ou dynamiques (2) dans la chambre de produit.

4. Procédé selon au moins l'une des revendications précédentes, **caractérisé par le fait que** la viscosité de la solution ou du mélange est calculée en mesurant la température du produit et en recalculant à partir d'un point d'ébullition et d'une viscosité connue à une composition différente de la solution.

5. Procédé selon au moins l'une des revendications précédentes, **caractérisé par le fait que** la température du mélange ou de la solution est contrôlée par une quantité de solvant ou quantité de mélange de solvants qui est ajoutée de manière dosée.

6. Procédé selon au moins l'une des revendications 3 à 5, **caractérisé par le fait que** la viscosité est déterminée à l'aide d'un couple de l'arbre (4) et/ou des installations statiques et/ou dynamiques (2).

7. Procédé selon au moins l'une des revendications 3 à 5, **caractérisé par le fait qu'**une déformation des installations statiques et/ou dynamiques (2) est utilisée pour déterminer la viscosité.

8. Procédé selon au moins l'une des revendications précédentes, **caractérisé par le fait que** le mélange comporte au moins un solvant volatil et au moins un solvant non volatil ainsi qu'un substrat non volatil solide ou liquide, dans lequel le substrat se dissout dans le solvant ou le mélange de solvants restant par évaporation au moins partielle de l'au moins un solvant volatil.

9. Dispositif pour la mise en œuvre du procédé selon au moins l'une des revendications 3 à 8, **caractérisé par le fait qu'**aux installations statiques et/ou dynamiques (2) est/sont associés un capteur de couple et/ou à un capteur de déformation.
